# FASCICULE DE BREVET EUROPEEN

(11) **EP 3 045 396 B1**
(45) Date de publication et mention de la délivrance du brevet: **30.08.2017**
(21) Numéro de dépôt: 16150513.6
(22) Date de dépôt: 08.01.2016
(51) Int. Cl.: B64G 1/40, B64G 1/66, F02K 9/84, F02K 9/80, B64G 1/26

(54) **ENSEMBLE DE POINTAGE D'UN INSTRUMENT**
AUSRICHTUNGSEINHEIT EINES INSTRUMENTES
POINTING ASSEMBLY OF AN INSTRUMENT

(30) Priorité: 14.01.2015 FR 1500071
(43) Date de publication de la demande: 20.07.2016
(73) Titulaire: THALES, 92400 Courbevoie (FR)
(72) Inventeur: Baudassé, Yannick, 06156 Cannes La Bocca Cedex (FR); Vézain, Stéphane, 06210 Mandelieu (FR); Mouille, Paul, 06156 Cannes La Bocca Cedex (FR); Stanek, Didier, 06150 Cannes La Bocca (FR)
(74) Mandataire: Collet, Alain

(56) Documents cités:
- WO-A1-2013/098386
- AT-U1- 3 647
- US-A- 5 419 521
- US-A1- 2005 183 377
- US-B1- 6 565 043

## Description

L'invention concerne un ensemble de pointage comprenant un instrument et un dispositif de pointage de l'instrument tel qu'une antenne, un miroir, une tuyère. L'invention peut s'appliquer au domaine spatial mais elle trouve application dans différents autres domaines tels que la navigation ou le positionnement d'un instrument quelconque par rapport à un autre. Nous prendrons comme exemple une application spatiale de l'invention.

Dans les applications spatiales, il est nécessaire de pouvoir orienter certains éléments d'un satellite ou d'un véhicule spatial, tels qu'une antenne ou un mât, dans une direction prédéterminée afin, par exemple, de les diriger vers une étoile fixe, de conserver un pointage vers un point à la surface de la terre, ou bien encore de balayer une zone particulière à la surface de la terre ou d'un astre quelconque. Sur le même principe, il est nécessaire de positionner un satellite lors de sa mise en orbite. Un satellite est propulsé par une ou plusieurs tuyères pour propulsion électrique ou pour propulsion chimique. On parle aussi de tuyère électrique ou tuyère chimique. L'orientation de chaque tuyère permet de positionner le satellite dans la position souhaitée. Il est donc nécessaire d'orienter chaque tuyère en fonction de la position souhaitée du satellite. Chaque tuyère est orientée à l'aide d'un dispositif appelé dispositif de pointage.

De nos jours, les nouveaux dispositifs de pointage de tuyères pour propulsion électrique nécessitent d'être fiabilisés et d'être plus compétitifs en termes de coûts et délais de livraison. Pour cela, il est nécessaire de pouvoir réduire le nombre de composants du dispositif de pointage, ce qui a un effet direct sur la réduction du coût, de la durée de fabrication et d'assemblage, d'intégration et de test.

Actuellement, les dispositifs de pointage de tuyères pour propulsion électrique sont composés de cardan motorisé déporté par rapport à la masse à mouvoir, c'est-à-dire par rapport à la tuyère et au plateau sur lequel est fixée la tuyère. On peut notamment citer la demande WO 2013/098386 concernant une plateforme stabilisée comprenant une structure porteuse rotative par rapport à un bâti selon un axe principal, ayant une structure portée rotative par rapport à la structure porteuse selon un axe secondaire, comprenant un support guidé en rotation par un palier central disposé d'un seul côté du support selon l'axe de rotation secondaire. Une telle configuration impose la présence d'un mécanisme de gerbage supplémentaire pour maintenir l'ensemble dans la configuration gerbée. En effet, la phase de lancement du satellite s'accompagne de vibrations, et il faut donc maintenir l'ensemble formé par le plateau déporté et la tuyère pendant la phase de lancement par un mécanisme de gerbage.

Dans les spécifications, il est demandé de positionner les composants de propulsion dans une certaine configuration spécifique de façon à pouvoir, en cas de panne du mécanisme de gerbage, fonctionner en mode dégradé. Cette demande impose des positions variables des composants selon les différents types de plateformes sur lesquelles les dispositifs de pointage sont montés. Un mécanisme de gerbage standard empêche ce type de montage multi-positions.

De même, pour les phases de réglages et de test au sol préalablement au lancement du satellite, il est nécessaire de pouvoir mouvoir les tuyères dans des positions extrêmes pour s'assurer du bon fonctionnement des composants. Le couple engendré par le déport des tuyères dépasse la capacité de motorisation des motoréducteurs et impose l'utilisation de mécanismes de compensation complexe et onéreux.

Enfin, la mise en place d'un mécanisme de gerbage entraîne un surcoût ainsi qu'une augmentation importante de la masse sur satellite, ce qui va à l'encontre de la solution voulue.

L'invention vise à pallier tout ou partie des problèmes cités plus haut en proposant un ensemble de pointage d'un instrument comprenant un dispositif de pointage de l'instrument avec aménagement des axes de rotation du dispositif permettant d'annuler, ou tout au moins limiter fortement, les charges appliquées au dispositif pendant la phase de lancement. L'invention présente l'avantage de ne plus nécessiter un mécanisme de gerbage.

A cet effet, l'invention a pour objet un ensemble de pointage comprenant un instrument et un dispositif de pointage, le dispositif de pointage comprenant :
- un châssis,
- une partie mobile comprenant un plateau, l'instrument étant fixé sur le plateau, la partie mobile et l'instrument ayant un centre de gravité,
la partie mobile étant mobile en rotation par rapport au châssis selon un premier axe de rotation, et comprenant un support configuré pour coopérer avec le plateau de façon à permettre au plateau d'être mobile en rotation par rapport au châssis autour d'un deuxième axe de rotation perpendiculaire au premier axe de rotation, et mobile en rotation par rapport au châssis selon le premier axe, les premier et deuxième axes de rotation s'intersectant en un point d'intersection, le point d'intersection coïncidant avec le centre de gravité de la partie mobile et de l'instrument, caractérisé en ce que le support comprend une partie flexible configurée pour compenser des dilatations différentielles selon le deuxième axe de rotation entre le support et le plateau.

Selon un mode de réalisation, le plateau est mobile en rotation par rapport au châssis autour d'un troisième axe de rotation perpendiculaire aux premier et deuxième axes de rotation, le troisième axe de rotation s'intersectant avec les premier et deuxième axes de rotation au point d'intersection.

Avantageusement, selon le précédent mode de réalisation, le support est configuré pour coopérer avec le plateau de façon à permettre au plateau d'être mobile en rotation par rapport au châssis autour du troisième axe de rotation.

Avantageusement, le plateau est mobile en rotation par rapport au châssis autour du troisième axe de rotation avec une amplitude de 360°.

Avantageusement, le support comprend un bras en forme de U, le bras ayant deux extrémités et une partie centrale, une première des deux extrémités étant reliée à la partie centrale par une première branche et une seconde des deux extrémités étant reliée à la partie centrale par une seconde branche, la partie centrale étant mobile en rotation par rapport au châssis selon le premier axe de rotation. Le plateau est positionné entre les deux extrémités du bras, et les deux extrémités sont configurées pour permettre la rotation du plateau par rapport au châssis autour du deuxième axe de rotation et la seconde branche forme la partie flexible du support.

Avantageusement, le dispositif de pointage comprend un premier actionneur associé au premier axe de rotation et permettant la rotation de la partie mobile par rapport au châssis.

Avantageusement, le dispositif de pointage comprend un second actionneur associé au deuxième axe de rotation et permettant la rotation du plateau par rapport au châssis.

Selon un mode de réalisation, l'instrument est une tuyère.

Selon un autre mode de réalisation, le dispositif de pointage comprend un conducteur destiné à alimenter la tuyère, le conducteur reliant la partie mobile au châssis. Le conducteur comprend une première partie enroulée autour du premier axe de rotation entre le châssis et la partie mobile.

Selon un autre mode de réalisation, le conducteur comprend une seconde partie enroulée autour du deuxième axe de rotation au niveau du support.

L'invention concerne aussi tout équipement spatial comprenant un ensemble de pointage tel que décrit dans cette demande.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un premier mode de réalisation d'un dispositif de pointage de l'ensemble de pointage selon l'invention,
- la figure 2 illustre deux liaisons pivot du dispositif de pointage selon l'invention,
- les figures 3a et 3b représentent schématiquement deux modes de réalisation de l'aménagement des axes de rotation du dispositif de pointage selon l'invention,
- la figure 4 représente deux actionneurs associés à deux axes de rotation du dispositif de pointage selon l'invention,
- la figure 5 représente schématiquement les actionneurs du dispositif de pointage selon l'invention,
- la figure 6 illustre un mode de réalisation de câblage d'alimentation du dispositif de pointage selon l'invention,
- la figure 7 montre un mode de réalisation du dispositif de pointage d'une tuyère à propulsion électrique,
- la figure 8 représente un autre mode de réalisation du dispositif de pointage selon l'invention,
- la figure 9 représente un autre mode de réalisation du dispositif de pointage selon l'invention.

Par souci de clarté, les mêmes éléments porteront les mêmes repères dans les différentes figures.

Dans la description de la présente demande, l'invention est décrite dans le cadre d'une application spatiale. Comme cité précédemment, l'invention peut s'appliquer à tout autre domaine technique nécessitant la mise en oeuvre d'un dispositif de pointage d'un instrument quelconque.

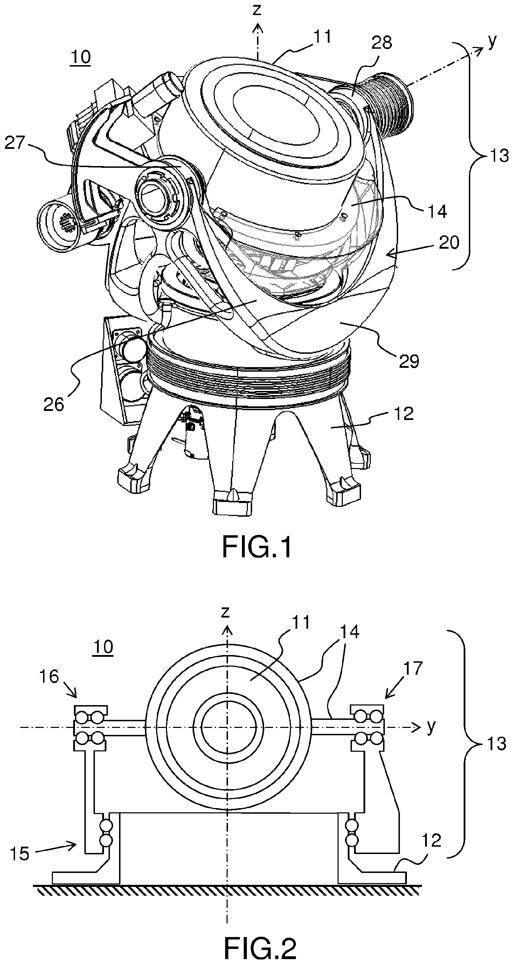

La figure 1 représente un premier mode de réalisation d'un dispositif de pointage 10 de l'ensemble de pointage selon l'invention. Le dispositif de pointage 10 est destiné à faire pointer un instrument 11 dans une direction prédéterminée. Dans le cadre d'une application spatiale, l'instrument 11 peut être par exemple une antenne que l'on souhaite pointer vers un point déterminé à la surface de la Terre. L'instrument 11 peut aussi être une tuyère, dont l'orientation permet le positionnement d'un satellite sur lequel elle est montée. Il est donc nécessaire d'orienter la tuyère en fonction de la position souhaitée du satellite.

Le dispositif de pointage 10 comprend un châssis 12. Le châssis 12, dans notre exemple du satellite, est fixé sur le satellite. Le dispositif de pointage 10 comprend une partie mobile 13 comprenant un plateau 14, l'instrument 11 étant fixé sur le plateau 14. La partie mobile 13 et l'instrument ont un centre de gravité G. La partie mobile 13 est mobile en rotation par rapport au châssis 12 selon un premier axe de rotation Z. Le plateau 14 est quant à lui mobile en rotation par rapport au châssis 12 autour d'un deuxième axe de rotation Y perpendiculaire au premier axe de rotation Z. Autrement dit, la partie mobile 13 comprend deux liaisons pivot, une première liaison pivot étant autour de l'axe Z et une seconde liaison pivot étant autour de l'axe Y. Les premier et deuxième axes de rotation Z, Y s'intersectent en un point d'intersection O. Selon l'invention, le point d'intersection O des axes de rotation Y, Z coïncide avec le centre de gravité G de la partie mobile 13 et de l'instrument. Autrement dit, la partie mobile 13 et l'instrument 11 forment un ensemble dont le centre de gravité G est confondu avec le point d'intersection O des deux axes de rotation Y, Z.

La partie mobile 13 comprend un support 20. Le support 20 est configuré pour coopérer avec le plateau 14 de façon à permettre au plateau 14 d'être mobile en rotation par rapport au châssis 12 selon le premier axe de rotation Z et d'être mobile en rotation par rapport au châssis 12 autour du deuxième axe de rotation Y.

La figure 2 illustre deux liaisons pivot du dispositif de pointage 10 selon l'invention. La première liaison pivot 15 de la partie mobile 13 autour de l'axe Z est obtenue par une paire de deux roulements. On parle alors de montage en porte à faux. La seconde liaison pivot permettant la rotation du plateau 14 et donc de l'instrument 11 autour de l'axe Y est obtenue par deux paires de roulements 16, 17 montées en paliers. Autrement dit, dans cette configuration, les deux extrémités 27, 28 du bras 26 du support 20 reçoivent chacune une liaison pivot permettant la rotation du plateau 14 autour du deuxième axe de rotation Y. Il est tout à fait possible de prévoir un montage en paliers sur le premier axe de rotation Z et/ou un montage en porte à faux sur le deuxième axe de rotation Y. On notera toutefois que la configuration du montage en porte à faux sur le premier axe de rotation Z et un montage en paliers sur le deuxième axe de rotation Y est particulièrement avantageuse, notamment dans le cas où l'instrument 11 est une tuyère, cette configuration permettant de limiter l'occultation du champ de vue vers l'espace, tout en améliorant l'environnement thermique de la tuyère.

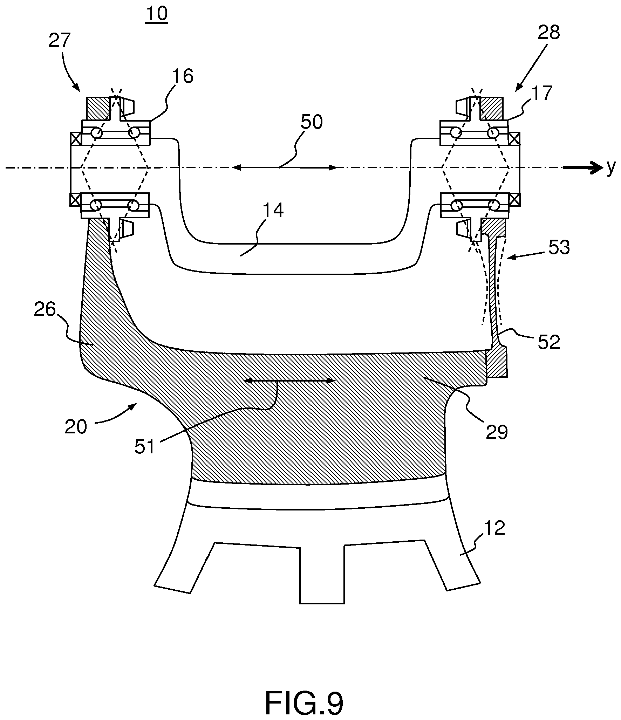

Selon un mode de réalisation avantageux, le support 20 peut comprendre une partie rigide et une partie flexible, la partie flexible étant configurée pour compenser des dilatations différentielles selon le second axe de rotation Y entre le châssis 12 et le plateau 14. Comme expliqué précédemment et visible sur la figure 9, le montage de la seconde liaison pivot est appelé montage en palier, les systèmes de guidage 16, 17 se trouvant de part et d'autre de l'objet 11 à guider. Dans le cas d'un montage en palier, la distance entre les deux systèmes de guidage 16, 17 est généralement importante et donc, lorsque les pièces sont soumises à de fortes excursions de température, il apparait des déformations différentielles entre les pièces. L'adjonction d'une souplesse rend le montage isostatique. Les roulements 16, 17 étant montés précontraints sur leur axe comme sur leur moyeu respectif, ceux-ci n'admettent aucun mouvement suivant leur axe. La flexibilité est suivant la direction de l'axe de rotation, c'est-à-dire le deuxième axe de rotation Y. Celle-ci permet de protéger les composants de guidage (tels que les roulements 16, 17) des mouvements différentiels entre la partie portée (le plateau 14) et la partie porteuse (le châssis 12). La partie flexible est destinée à compenser les dilatations différentielles entre le châssis 12 et le plateau 14 suivant l'axe de rotation Y, indiquées par les flèches 50, 51. La partie flexible est apte à faire un mouvement 53 selon l'axe de rotation Y, comme indiqué sur la figure 9 par les pointillés, lorsque le dispositif 10 subit des variations thermiques. La partie flexible reprend les efforts dans le plan normal à l'axe de rotation Y. La partie rigide reprend, quant à elle, les charges suivant tous les axes.

La partie flexible est généralement obtenue par une lame flexible 52, composée d'une base rigide vissée sur un support rigide (la partie centrale 29 du bras 26 sur la figure 0) et d'un moyeu rigide sur sa partie opposée apte à recevoir un roulement 17 par exemple. On ne sort pas du cadre de l'invention si on utilise à la place d'une lame flexible une plaque flexible ou tout autre élément linéaire pourvu d'une certaine flexibilité.

Il est également possible, quand l'encombrement le permet, de réaliser une membrane composée de deux couronnes rigides liées entre elles par un fin disque déformable suivant l'axe des couronnes. Les matériaux utilisés sont habituellement l'acier inoxydable, les alliages de cuivre ou le titane.

La capacité de flexion de la lame flexible est généralement de l'ordre de quelques dixième de millimètres en tête de lame au niveau des roulements 16, 17. Cette capacité de flexion peut passer à un millimètre dans le cas de pièces utilisées très longues. Par exemple, pour un différentiel de température de 50 à 70°C et une distance entre les roulements de 200 à 300mm, la lame flexible a une capacité de flexion d'environ 0.3mm.

Le support 20 comprend un bras 26 en forme de U, le bras 26 ayant deux extrémités 27, 28 et une partie centrale 29, la partie centrale 29 étant mobile en rotation par rapport au châssis 12 selon le premier axe de rotation Z. Le plateau 14 est positionné entre les deux extrémités 27, 28 du bras 26, et les deux extrémités 27, 28 sont configurées pour permettre la rotation du plateau 14 par rapport au châssis 12 autour du deuxième axe de rotation Y. Grâce à sa forme en U, le bras 26 permet à l'instrument 11 de pointer librement dans la direction souhaitée, sans aucun obstacle dans sa direction de pointage, indépendamment des rotations autour des axes Y et Z du plateau 14. Le bras 26 a une forme de U. On entend par forme de U toute forme assimilable à un U, c'est-à-dire toute forme ayant une partie centrale 29 s'étendant selon une direction et se terminant par deux extrémités s'étendant dans une autre direction sensiblement perpendiculairement à la direction de la partie centrale 29. A l'extrême, le bras 26 peut également avoir sensiblement la forme d'un demi-cercle. Le bras 26 est configuré pour permettre la rotation du plateau 14 positionné entre ses deux extrémités 27, 28.

Le support 20 apporte une rigidité supplémentaire au dispositif de pointage 10. Il constitue aussi un support pour les liaisons pivot.

La partie flexible constitue une souplesse qui peut être située à différents endroits sur le chemin de raideur. L'objectif de cette souplesse est de protéger les roulements qui sont des éléments fragiles face aux poussées provoquées par la dilatation des différents éléments guidés. Ainsi, la partie centrale 29 et la première branche peuvent former la partie rigide du support 20 et la seconde branche peut former la partie flexible du support 20.

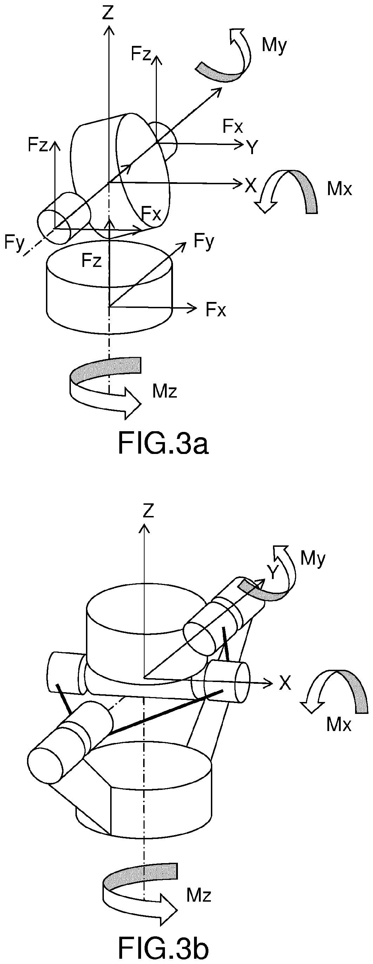

La figure 3a représente schématiquement un mode de réalisation de l'aménagement des axes de rotation du dispositif de pointage 10 selon l'invention. Seule la partie mobile 13 du dispositif de pointage 10 est représentée. Comme expliqué précédemment, un des objectifs de l'invention est de réduire le nombre de composants du dispositif de pointage, et notamment de se dispenser d'un dispositif de gerbage. Pendant la phase de lancement, le dispositif de pointage est soumis à des accélérations dues aux vibrations du lancement. Un dispositif de gerbage permet de maintenir le dispositif de pointage dans sa configuration. L'aménagement des axes de rotation du dispositif de pointage 10 tel que représenté sur la figure 3a permet d'assurer la reprise des charges par les éléments existants et ainsi de s'affranchir d'un système spécifique. Comme illustré sur la figure 3a, à chaque liaison pivot sont appliquées des charges que l'on peut dissocier en forces notées F et en moments notés M. Ainsi, si on considère un repère orthonormé (O, X, Y, Z), O étant le point d'intersection déjà défini, Y étant le deuxième axe de rotation, Z étant le premier axe de rotation et X étant un axe perpendiculaire aux axes Y et Z, à chaque liaison pivot sont associées des charges notées Fx, Fy, Fz, Fx représentant la projection de la force F dans le repère orthonormé (O, X, Y, Z) respectivement selon l'axe X, l'axe Y et l'axe Z. Par ailleurs, la partie mobile 13 est également soumise à des moments Mx, My, Mz respectivement selon les axes X, Y et Z. Avec son centre de gravité G coïncidant avec le point d'intersection O de ses axes de rotations Y et Z, les charges notées Fx, Fy, Fz et Mx sont intégralement reprises par les liaisons pivot de la partie mobile 13.

La figure 3b représente schématiquement un autre mode de réalisation de l'aménagement des axes de rotation du dispositif de pointage 10 selon l'invention. Le mode de réalisation de la figure 3b est identique à celui de la figure 3a. Dans le mode de réalisation de la figure 3b, le plateau 14 est, en plus, mobile en rotation par rapport au châssis 12 autour d'un troisième axe de rotation X perpendiculaire aux premier et deuxième axes de rotation Y, Z, le troisième axe de rotation X s'intersectant avec les premier et deuxième axes de rotation Z, Y au point d'intersection O. Comme pour le mode de réalisation présenté à la figure 3a, l'aménagement des axes de rotation du dispositif de pointage 10 tel que représenté sur la figure 3b permet d'assurer, de manière analogue entre l'axe X et l'axe Y, la reprise des charges par les éléments existants, et ainsi de s'affranchir d'un système spécifique.

Dans le mode de réalisation de la figure 3b, le support 20 est configuré pour coopérer avec le plateau 14 de façon à permettre au plateau 14 d'être mobile en rotation par rapport au châssis 12 autour du deuxième axe de rotation Y et du troisième axe de rotation X et mobile en rotation par rapport au châssis 12 selon le premier axe de rotation Z.

Le plateau 14 peut être mobile en rotation par rapport au châssis 12 autour du troisième axe de rotation X avec une amplitude de 360°. En effet, le support 20 est configuré pour coopérer avec le plateau 14 de façon à permettre au plateau 14 d'être mobile en rotation par rapport au châssis 12 autour du deuxième axe de rotation Y et du troisième axe de rotation X et mobile en rotation par rapport au châssis 12 selon le premier axe de rotation Z. Aussi, l'instrument 11 est configuré pour permettre la rotation du plateau 14 et de l'instrument 11 autour du troisième axe de rotation X. Cette rotation peut être complète mais elle peut également être de 90° ou 120° selon le pointage souhaité. Comme représenté sur la figure 3b, le plateau 14 et l'instrument 11 sont positionnés entre les extrémités 27, 28 du bras 26. Le support 20 peut de manière analogue comprendre un second bras fixé au bras 26 de façon que le second bras ait deux extrémités positionnées le long de l'axe X, de part et d'autre du plateau 14 et de l'instrument 11.

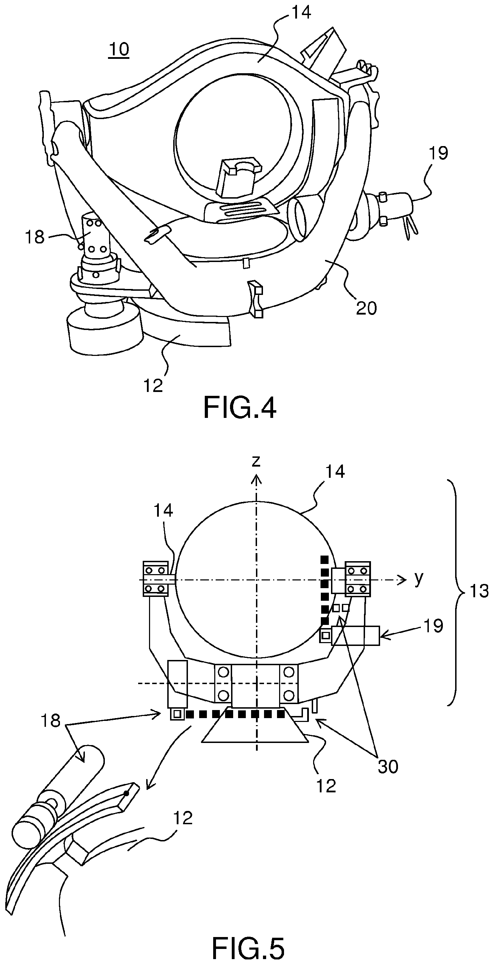

La figure 4 représente deux actionneurs associés à deux axes de rotation du dispositif de pointage selon l'invention. Le dispositif de pointage 10 comprend un premier actionneur 18 associé au premier axe de rotation Z et permettant la rotation de la partie mobile 13 par rapport au châssis 12. L'actionneur 18 comprend un premier motoréducteur et un premier capteur angulaire. Le dispositif de pointage 10 comprend aussi un second actionneur 19 associé au deuxième axe de rotation Y et permettant la rotation du plateau par rapport au châssis. L'actionneur 19, de même, comprend un second motoréducteur et un second capteur angulaire. Les deux capteurs angulaires détectent chacun une position angulaire, celle de la partie mobile 13 et celle du plateau 14, permettant de déterminer la position réelle de l'instrument 11. Une comparaison entre la position réelle et la position souhaitée de l'instrument 11 est effectuée. Si la position réelle diffère de la position souhaitée, les actionneurs 18 et 19 sont activés de façon à ce que les motoréducteurs permettent la rotation de la partie mobile 13 et du plateau 14 de manière à positionner l'instrument 14 dans la position souhaitée. Le support 20 est l'interface de montage pour les motoréducteurs. C'est le support 20 qui reçoit les arrêts mécaniques pour limiter la rotation des deux axes Y et Z.

La figure 5 représente schématiquement les actionneurs 18 et 19 du dispositif de pointage 10 selon l'invention. Précédemment, nous avons vu que les charges notées Fx, Fy, Fz et Mx sont intégralement reprises par les liaisons pivot de la partie mobile 13. Les moments résiduels My et Mz, tous deux liés à l'éventuelle délocalisation du centre de gravité G par rapport à l'axe de rotation, sont quant à eux repris par les actionneurs 18 et 19.

Les actionneurs 18, 19 peuvent comprendre un motoréducteur à engrenages (tel qu'un train épicycloïdal), appelé premier réducteur et un réducteur à lame, appelé second réducteur ou réducteur secondaire. Le réducteur à lame présente l'avantage d'un déport du motoréducteur par rapport à la source de chaleur induite par la tuyère. Il présente aussi l'avantage de pouvoir réduire les jeux angulaires du premier réducteur assurant ainsi une meilleure précision. Enfin, le réducteur secondaire à lame peut augmenter le couple de motorisation et l'irréversibilité sous charge.

Le dispositif de pointage 10 comprend également des butées mécaniques 30 permettant de limiter les rotations, respectivement selon les axes Y et Z.

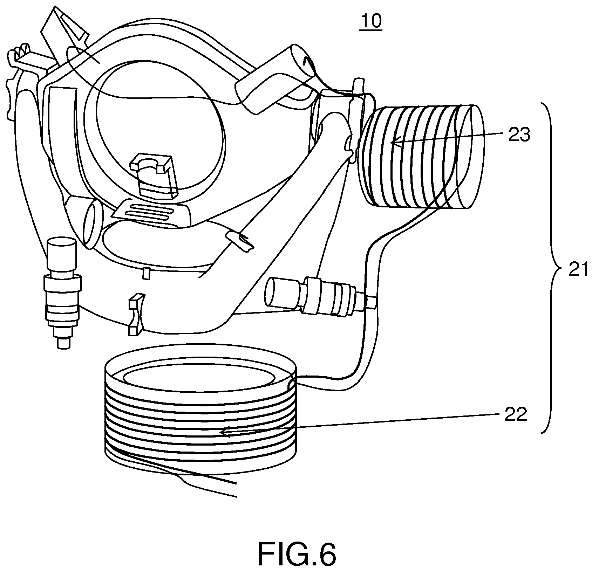

La figure 6 illustre un mode de réalisation de câblage d'alimentation du dispositif de pointage 10 selon l'invention. Dans le cas où l'instrument 11 est une tuyère, celle-ci doit être alimentée, que ce soit électriquement ou chimiquement. Le dispositif de pointage 10 comprend un conducteur 21 destiné à alimenter la tuyère, le conducteur 21 reliant la partie mobile 13 au châssis 12. Le conducteur 21 comprend une première partie enroulée 22 autour du premier axe de rotation Z entre le châssis 12 et la partie mobile 13. On parle ici d'une manière générale d'un conducteur 21 destiné à l'alimentation de la tuyère mais plus précisément, le dispositif de pointage 10 peut comporter des conducteurs 21 destinés chacun à l'alimentation chimique, fluidique et/ou électrique de la tuyère (selon le type de propulsion de la tuyère). Le conducteur 21 peut par exemple consister en un tube ou tuyau destiné à alimenter la tuyère par un fluide dans le cas d'une tuyère à propulsion chimique. Le conducteur 21 peut aussi être un conducteur électrique dans le cas d'une tuyère à propulsion électrique. Plus généralement, le conducteur 21 est un conducteur pour une double alimentation (électrique et fluidique).

Le conducteur 21 comprend une seconde partie enroulée 23 autour du deuxième axe de rotation Y au niveau du support 20. La partie du conducteur 21 située entre la première partie enroulée 22 et la seconde partie enroulée 23 du conducteur 21 est fixée au support 20.

Il est également possible de prévoir d'autres configurations de positionnement du conducteur 21 entre le châssis 12 et la tuyère. Néanmoins, la configuration décrite permet d'avoir un conducteur dans un volume très réduit et sans gêner les mobilités en rotation du dispositif de pointage 10 de la tuyère.

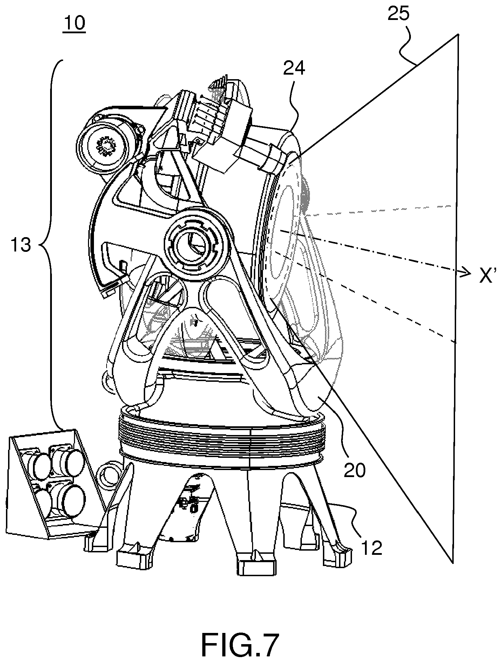

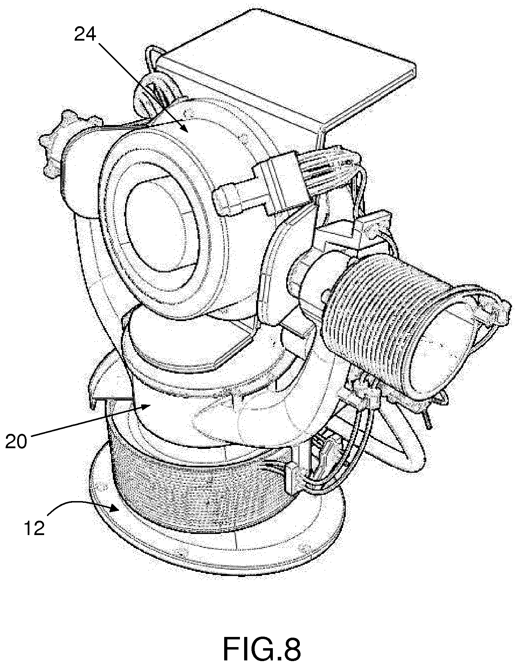

La figure 7 montre un mode de réalisation du dispositif de pointage 10 d'une tuyère à propulsion électrique 24. La tuyère à propulsion électrique 24 pointe dans une direction que nous notons X'. Il est connu qu'une majeure partie du plasma est éjecté dans un cône 25 d'environ 45 degrés autour de l'axe X'. De plus, de manière avantageuse, le dispositif de pointage 10 ne doit pas avoir de composants dans le plan de la tuyère 24. En effet, en fonctionnement, la tuyère 24 génère de l'énergie radiative. Il faut donc limiter le champ de vue de la tuyère avec les composants du dispositif de pointage 10, et maximiser autant que possible son exposition vers l'environnement spatial. Comme expliqué précédemment dans la description de la figure 2, une configuration optimale en termes de compacité du dispositif de pointage 10, de disponibilité de volume et de facteur de vue de la tuyère a été obtenue avec un montage en porte à faux sur le premier axe de rotation Z et un montage en paliers des roulements montés de part et d'autre de la partie mobile 13. De plus, le support 20 est configuré pour permettre à la tuyère d'être pleinement orientée vers l'environnement spatial. Enfin, il est possible d'incliner le châssis 12 comme représenté sur la figure 8. Dans cet autre mode de réalisation du dispositif de pointage 10, l'inclinaison du châssis 20 permet à la tuyère 24 d'être orientée vers l'espace sans qu'aucun composant du dispositif de pointage 10 ne se trouve dans le cône 25 de plasma.

Le dispositif de pointage 10 étant un dispositif compact pouvant comprendre une tuyère générant des flux thermiques radiatifs et conductifs, les composants du dispositif de pointage 10 sont exposés à ces flux. Pour améliorer la durée de vie de ces composants, il est possible de les protéger thermiquement en les couvrant d'une couche d'isolation thermique.

L'invention concerne également tout équipement spatial comprenant un dispositif de pointage 10 tel que décrit précédemment.

## Revendications

1. Ensemble de pointage comprenant un instrument (11) et un dispositif de pointage (10), le dispositif de pointage (10) comprenant :
- un châssis (12),
- une partie mobile (13) comprenant un plateau (14), l'instrument (11) étant fixé sur le plateau (14), la partie mobile (13) et l'instrument (11) ayant un centre de gravité (G),
la partie mobile (13) étant mobile en rotation par rapport au châssis (12) selon un premier axe de rotation (Z), et comprenant un support (20) configuré pour coopérer avec le plateau (14) de façon à permettre au plateau (14) d'être mobile en rotation par rapport au châssis (12) autour d'un deuxième axe de rotation (Y) perpendiculaire au premier axe de rotation (Z), et mobile en rotation par rapport au châssis (12) selon le premier axe (Z), les premier et deuxième axes de rotation (Z, Y) s'intersectant en un point d'intersection (O), le point d'intersection (O) coïncidant avec le centre de gravité (G) de la partie mobile (13) et de l'instrument (11), **caractérisé en ce que** le support (20) comprend une partie flexible configurée pour compenser des dilatations différentielles selon le deuxième axe de rotation (Y) entre le support (20) et le plateau (14).

2. Ensemble de pointage selon la revendication 1, **caractérisé en ce que** le plateau (14) est mobile en rotation par rapport au châssis (12) autour d'un troisième axe de rotation (X) perpendiculaire aux premier et deuxième axes de rotation (Y, Z), le troisième axe de rotation (X) s'intersectant avec les premier et deuxième axes de rotation (Z, Y) au point d'intersection (O).

3. Ensemble de pointage selon la revendication 2, **caractérisé en ce que** le support (20) est configuré pour coopérer avec le plateau (14) de façon à permettre au plateau (14) d'être mobile en rotation par rapport au châssis (12) autour du troisième axe de rotation (X).

4. Ensemble de pointage selon l'une quelconque des revendications 2 ou 3, **caractérisé en ce que** le plateau (14) est mobile en rotation par rapport au châssis (12) autour du troisième axe de rotation (X) avec une amplitude de 360°.

5. Ensemble de pointage selon la revendication 1 ou 2, **caractérisé en ce que** le support (20) comprend un bras (26) en forme de U, le bras (26) ayant deux extrémités (27, 28) et une partie centrale (29), une première des deux extrémités (27) étant reliée à la partie centrale (29) par une première branche et une seconde des deux extrémités (28) étant reliée à la partie centrale (29) par une seconde branche, la partie centrale (29) étant mobile en rotation par rapport au châssis (12) selon le premier axe de rotation (Z), **en ce que** le plateau (14) est positionné entre les deux extrémités (27, 28) du bras (26), **en ce que** les deux extrémités (27, 28) sont configurées pour permettre la rotation du plateau (14) par rapport au châssis (12) autour du deuxième axe de rotation (Y), et **en ce que** la seconde branche forme la partie flexible du support (20).

6. Ensemble de pointage selon l'une des revendications précédentes, **caractérisé en ce que** le dispositif de pointage (10) comprend un premier actionneur (18) associé au premier axe de rotation (Z) et permettant la rotation de la partie mobile (13) par rapport au châssis (12).

7. Ensemble de pointage selon l'une des revendications précédentes, **caractérisé en ce que** le dispositif de pointage (10) comprend un second actionneur (19) associé au deuxième axe de rotation (Y) et permettant la rotation du plateau (14) par rapport au châssis (12).

8. Ensemble de pointage selon l'une des revendications 1 à 7, **caractérisé en ce que** l'instrument (11) est une tuyère.

9. Ensemble de pointage selon la revendication 8, **caractérisé en ce que** le dispositif de pointage (10) comprend un conducteur (21) destiné à alimenter la tuyère, le conducteur (21) reliant la partie mobile (13) au châssis (12), **en ce que** le conducteur (21) comprend une première partie enroulée (22) autour du premier axe de rotation (Z) entre le châssis (12) et la partie mobile (13).

10. Ensemble de pointage selon l'une des revendications 8 ou 9, **caractérisé en ce que** le dispositif de pointage (10) comprend un conducteur (21) destiné à alimenter la tuyère, le conducteur (21) reliant la partie mobile (13) au châssis (12), **en ce que** le conducteur (21) comprend une seconde partie enroulée (23) autour du deuxième axe de rotation (Y) au niveau du support (20).

11. Equipement spatial comprenant un ensemble de pointage selon l'une des revendications précédentes.

## Patentansprüche

1. Ausrichtungsbaugruppe, die ein Instrument (11) und eine Ausrichtungsvorrichtung (10) umfasst, wobei die Ausrichtungsvorrichtung (10) Folgendes umfasst:
- ein Chassis (12),
- einen beweglichen Teil (13), der ein Plateau (14) umfasst, wobei das Instrument (11) an dem Plateau (14) befestigt ist, wobei der bewegliche Teil (13) und das Instrument (11) einen Schwerpunkt (G) haben,
wobei der bewegliche Teil (13) mit Bezug auf das Chassis (12) um eine erste Drehachse (Z) drehbeweglich ist und einen Träger (20) umfasst, konfiguriert zum Zusammenwirken mit dem Plateau (14), um es zuzulassen, dass das Plateau (14) mit Bezug auf das Chassis (12) um eine zweite Drehachse (Y) lotrecht zu der ersten Drehachse (Z) und mit Bezug auf das Chassis (12) um die erste Achse (Z) drehbeweglich ist, wobei sich die erste und zweite Drehachse (Z, Y) in einem Schnittpunkt (O) schneiden,
wobei der Schnittpunkt (O) mit dem Schwerpunkt (G) des beweglichen Teils (13) und des Instruments (11) übereinstimmt, **dadurch gekennzeichnet, dass** der Träger (20) einen flexiblen Teil umfasst, konfiguriert zum Kompensieren unterschiedlicher Ausdehnungen um die zweite Drehachse (Y) zwischen dem Träger (20) und dem Plateau (14).

2. Ausrichtungsbaugruppe nach Anspruch 1, **dadurch gekennzeichnet, dass** das Plateau (14) mit Bezug auf das Chassis (12) um eine dritte Drehachse (X) lotrecht zu der ersten oder zweiten Drehachse (Y, Z) drehbeweglich ist, wobei die dritte Drehachse (X) die erste und die zweite Drehachse (Z, Y) im Schnittpunkt (O) schneidet.

3. Ausrichtungsbaugruppe nach Anspruch 2, **dadurch gekennzeichnet, dass** der Träger (20) zum Zusammenwirken mit dem Plateau (14) konfiguriert ist, um es zuzulassen, dass das Plateau (14) mit Bezug auf das Chassis (12) um die dritte Drehachse (X) drehbeweglich ist.

4. Ausrichtungsbaugruppe nach Anspruch 2 oder 3, **dadurch gekennzeichnet, dass** das Plateau (14) mit Bezug auf das Chassis (12) um die dritte Drehachse (X) mit einer Amplitude von 360° drehbeweglich ist.

5. Ausrichtungsbaugruppe nach Anspruch 1 oder 2, **dadurch gekennzeichnet, dass** der Träger (20) einen U-förmigen Arm (26) umfasst, wobei der Arm (26) zwei Enden (27, 28) und ein Mittelteil (29) aufweist, wobei ein erstes der beiden Enden (27) mit dem Mittelteil (29) durch einen ersten Zweig verbunden ist und ein zweites der beiden Enden (28) mit dem Mittelteil (29) durch einen zweiten Zweig verbunden ist, wobei der Mittelteil (29) mit Bezug auf das Chassis (12) um die erste Drehachse (Z) drehbeweglich ist, dadurch, dass das Plateau (14) zwischen den beiden Enden (27, 28) des Arms (26) positioniert ist, dadurch, dass die beiden Enden (27, 28) so konfiguriert sind, dass sie eine Drehung des Plateaus (14) mit Bezug auf das Chassis (12) um die zweite Drehachse (Y) zulassen, und dadurch, dass der zweite Zweig den flexiblen Teil des Trägers (20) bildet.

6. Ausrichtungsbaugruppe nach einem der vorherigen Ansprüche, **dadurch gekennzeichnet, dass** die Ausrichtungsvorrichtung (10) ein erstes Stellglied (18) umfasst, das mit der ersten Drehachse (Z) assozüert ist und die Drehung des beweglichen Teils (13) mit Bezug auf das Chassis (12) zulässt.

7. Ausrichtungsbaugruppe nach einem der vorherigen Ansprüche, **dadurch gekennzeichnet, dass** die Ausrichtungsvorrichtung (10) ein zweites Stellglied (19) umfasst, das mit der zweiten Drehachse (Y) assoziiert ist und die Drehung des Plateaus (14) mit Bezug auf das Chassis (12) zulässt.

8. Ausrichtungsbaugruppe nach einem der Ansprüche 1 bis 7, **dadurch gekennzeichnet, dass** das Instrument (11) eine Düse ist.

9. Ausrichtungsbaugruppe nach Anspruch 8, **dadurch gekennzeichnet, dass** die Ausrichtungsvorrichtung (10) eine Leitung (21) zum Speisen der Düse umfasst, wobei die Leitung (21) den beweglichen Teil (13) mit dem Chassis (12) verbindet, dadurch, dass die Leitung (21) einen ersten Teil (22) umfasst, der um die erste Drehachse (Z) zwischen dem Chassis (12) und dem beweglichen Teil (13) gewickelt ist.

10. Ausrichtungsbaugruppe nach Anspruch 8 oder 9, **dadurch gekennzeichnet, dass** die Ausrichtungsvorrichtung (10) eine Leitung (21) zum Speisen der Düse umfasst, wobei die Leitung (21) den beweglichen Teil (13) mit dem Chassis (12) verbindet, dadurch, dass die Leitung (21) einen um die zweite Drehachse (Y) an dem Träger (20) gewickelten zweiten Teil (23) umfasst.

11. Weltraumausrüstung, die eine Ausrichtungsbaugruppe nach einem der vorherigen Ansprüche umfasst.

## Claims

1. Aiming assembly comprising an instrument (11) and an aiming device (10), the aiming device (10) comprising:
- a frame (12),
- a mobile part (13) comprising a plate (14), the instrument (11) being fixed onto the plate (14), the mobile part (13) and the instrument (11) having a centre of gravity (G),
the mobile part (13) being rotationally mobile relative to the frame (12) on a first axis of rotation (Z) and comprising a support (20) configured to cooperate with the plate (14) so as to allow the plate (14) to be rotationally mobile relative to the frame (12) about a second axis of rotation (Y) at right angles to the first axis of rotation (Z), and rotationally mobile relative to the frame (12) on the first axis (Z), the first and second axes of rotation (Z, Y) intersecting at a point of intersection (O),
the point of intersection (O) coinciding with the centre of gravity (G) of the mobile part (13) and of the instrument (11), **characterized in that** the support (20) comprises a flexible part configured to compensate for the differential expansions on the second axis of rotation (Y) between the support (20) and the plate (14).

2. Aiming assembly according to Claim 1, **characterized in that** the plate (14) is rotationally mobile relative to the frame (12) about a third axis of rotation (X) at right angles to the first and second axes of rotation (Y, Z), the third axis of rotation (X) intersecting with the first and second axes of rotation (Z, Y) at the point of intersection (O).

3. Aiming assembly according to Claim 2, **characterized in that** the support (20) is configured to cooperate with the plate (14) so as to allow the plate (14) to be rotationally mobile relative to the frame (12) about the third axis of rotation (X).

4. Aiming assembly according to either one of Claims 2 and 3, **characterized in that** the plate (14) is rotationally mobile relative to the frame (12) about the third axis of rotation (X) with an amplitude of 360°.

5. Aiming assembly according to Claim 1 or 2, **characterized in that** the support (20) comprises a U-shaped arm (26), the arm (26) having two ends (27, 28) and a central part (29), a first of the two ends (27) being linked to the central part (29) by a first branch and a second of the two ends (28) being linked to the central part (29) by a second branch, the central part (29) being rotationally mobile relative to the frame (12) on the first axis of rotation (Z), **in that** the plate (14) is positioned between the two ends (27, 28) of the arm (26), **in that** the two ends (27, 28) are configured to allow the rotation of the plate (14) relative to the frame (12) about the second axis of rotation (Y), and **in that** the second branch forms the flexible part of the support (20).

6. Aiming assembly according to one of the preceding claims, **characterized in that** the aiming device (10) comprises a first actuator (18) associated with the first axis of rotation (Z) and allowing the rotation of the mobile part (13) relative to the frame (12).

7. Aiming assembly according to one of the preceding claims, **characterized in that** the aiming device (10) comprises a second actuator (19) associated with the second axis of rotation (Y) and allowing the rotation of the plate (14) relative to the frame (12).

8. Aiming assembly according to one of Claims 1 to 7, **characterized in that** the instrument (11) is a jet.

9. Aiming assembly according to Claim 8, **characterized in that** the aiming device (10) comprises a conductor (21) intended to supply the jet, the conductor (21) linking the mobile part (13) to the frame (12), **in that** the conductor (21) comprises a first part wound (22) about the first axis of rotation (Z) between the frame (12) and the mobile part (13).

10. Aiming assembly according to one of Claims 8 or 9, **characterized in that** the aiming device (10) comprises a conductor (21) intended to supply the jet, the conductor (21) linking the mobile part (13) to the frame (12), **in that** the conductor (21) comprises a second part wound (23) about the second axis of rotation (Y) at the level of the support (20).

11. Spacecraft comprising an aiming assembly according to one of the preceding claims.
